# EUROPÄISCHE PATENTANMELDUNG

(11) **EP 3 335 900 A1**
(43) Veröffentlichungstag der Anmeldung: **20.06.2018**
(21) Anmeldenummer: 17001968.1
(22) Anmeldetag: 30.11.2017
(51) Int. Cl.: B42D 25/41, B42D 25/435, B42D 25/346, B42D 25/351, B42D 25/36, B42D 25/378, B42D 25/23, B42D 25/24, B42D 25/29, B23K 26/00, B23K 26/38

(54) **LASERSCHNEIDEN UND LASERVERFÄRBEN VON SICHERHEITSDOKUMENTEN**

(30) Priorität: 13.12.2016 DE 102016014845
(71) Anmelder: Giesecke+Devrient Currency Technology GmbH, 81677 München (DE)
(72) Erfinder: Distler, Andreas, 90762 Fürth (DE); Gregarek, André, 81671 München (DE)

(57) **Zusammenfassung**

Die Erfindung betrifft ein Verfahren zur Herstellung eines Sicherheitsmerkmals für ein Sicherheitselement, ein Sicherheitspapier oder einen Datenträger, wobei ein Substrat bereitgestellt wird, das durch Laserstrahlung hinsichtlich seiner Farbe modifizierbar ist, wobei durch Einwirkung von im Strahlquerschnitt intensitätsverteilter Laserstrahlung Löcher von bestimmtem Lochdurchmesser in das Substrat eingebracht werden.

Erfindungsgemäß bringt ein erster Laserstrahl die Löcher in das Substrat ein und führt ein zweiter Laserstrahl die Modifizierung der Farbe des Substrats durch. Die beiden Laserstrahlen werden zu einem einzigen Laserstrahl vereinigt, wobei der vereinigte Laserstrahl auf die Oberfläche des Substrats geführt wird.

## Beschreibung

Die Erfindung betrifft ein Verfahren zur Herstellung eines Sicherheitsmerkmals für ein Sicherheitselement, ein Sicherheitspapier oder einen Datenträger, wobei ein Substrat bereitgestellt wird, das durch Laserstrahlung hinsichtlich seiner Farbe modifizierbar ist, wobei durch Einwirkung von im Strahlquerschnitt intensitätsverteilter Laserstrahlung Löcher von bestimmtem Lochdurchmesser in das Substrat eingebracht werden.

Mit den aus dem Stand der Technik bekannten Verfahren können mit Hilfe eines Laserstrahls Substrate (wie beispielsweise Papier oder Folie) geschnitten oder perforiert und auf das Substrat applizierte Beschichtungen abgetragen (beispielsweise Metall) oder verfärbt (beispielsweise AOM - Ammoniumoctamolybdat) werden.

Derartige Verfahren sind beispielsweise aus den folgenden Schriften bekannt: WO 2016/177447 A1, DE 4334848 C1, WO 2010/072329 A1, WO 2011/154112 A1, WO 2009/003588 A1, WO 2009/003587 A1, DE 10 2010 053 052 A1, DE 10 2008 046 513 A1 oder WO 2016/177447 A1.

Stand der Technik ist dabei insbesondere ein zweistufiger Laserprozess (hier und im Folgenden mit "ColorCut" bezeichnet) mit einem Laser, in der Regel ein CO₂-Laser, der die gleiche Struktur zweimal unmittelbar nacheinander abfährt. Im ersten Schritt ("Cut") wird mit einer hohen Laserintensität das Substrat (beispielsweise Papier oder Folie) geschnitten oder perforiert, wonach im zweiten Schritt ("Color") mit einer niedrigen Laserintensität entlang der Schnittkante eine zuvor auf dem Substrat applizierte Beschichtung abgetragen (beispielsweise Metall) oder verfärbt (beispielsweise AOM) wird. Die Reihenfolge der beiden Schritte ist dabei frei wählbar. So kann auch erst der Schritt "Color" erfolgen und dann der Schritt "Cut". Auch eine gemischte Abfolge von beispielsweise "Color", "Cut", "Color" usw. ist möglich.

Nachteil der aus dem Stand der Technik bekannten Verfahren ist jedoch, dass der Schneideprozess und der Verfärbungsprozess durch zwei aufeinanderfolgende Laserschritte durchgeführt wird, wobei die gesamte Prozessdauer der Summe der beiden Einzelprozessdauern entspricht. Bei großen und komplizierten Strukturen kann der Gesamtprozess demnach sehr lange dauern. Des Weiteren entsteht bei schnellem Lasern on-the-fly bei hohen Bahngeschwindigkeiten durch das doppelte Abfahren der Struktur eine Passerungenauigkeit zwischen Verfärbung und Schnitt des Substrats.

Der Erfindung liegt deshalb die Aufgabe zugrunde, ein gattungsgemäßes Verfahren derart weiterzubilden, dass die Nachteile des Standes der Technik behoben werden und der Schutz gegenüber Fälschungen weiter erhöht wird. Insbesondere soll eine Erhöhung der Prozessgeschwindigkeit und der Passergenauigkeit gegenüber ColorCut erreicht werden.

Diese Aufgabe wird durch die Merkmale der unabhängigen Ansprüche gelöst. Weiterbildungen der Erfindung sind Gegenstand der abhängigen Ansprüche.

Erfindungsgemäß bringt ein erster Laserstrahl die Löcher in das Substrat ein und führt ein zweiter Laserstrahl die Modifizierung der Farbe des Substrats durch. Die beiden Laserstrahlen und werden zu einem einzigen Laserstrahl vereinigt, wobei der vereinigte Laserstrahl auf die Oberfläche des Substrats geführt wird.

Die Erfindung basiert somit auf der Kombination der beiden Laserschritte des ColorCut-Prozesses zu einem einzigen Laserschritt. Dazu werden zwei unterschiedliche Laserstrahlen vereinigt und beispielsweise durch denselben Strahlengang innerhalb eines Scankopfes geführt, so dass sie im selben Punkt bzw. dem selben oder einem überlappenden Flächenbereich auf die Oberfläche des Substrats treffen.

Diese beiden Laserstrahlen werden nachfolgend "Laserstrahl 1" und "Laserstrahl 2" genannt. Durch diese Bezeichnung soll jedoch keine Reihenfolge vorgegeben werden, vielmehr könnte Laserstrahl 1 ebenso auch als" der eine" Laserstrahl und Laserstrahl 2 auch als" der andere" Laserstrahl bezeichnet werden.

Gemäß einer bevorzugten Ausführungsform führt der erste Laserstrahl 1 den Schneideprozess zur Erzeugung der Löcher durch, weist eine dafür erforderliche hohe Intensität bzw. hohe Energiedichte auf der Oberfläche des Substrats und im Gegensatz dazu einen kleinen Strahldurchmesser auf der Oberfläche des Substrats auf. Gemäß einer weiteren bevorzugten Ausführungsform führt der zweite Laserstrahl 2 den Verfärbungsprozess bzw. die Modifizierung der Farbe des Substrats insbesondere um die Löcher herum durch, weist eine dafür erforderliche niedrigere Intensität bzw. geringe Energiedichte als der erste Laserstrahl 1 auf der Oberfläche des Substrats und im Gegensatz dazu einen großen Strahldurchmesser auf der Oberfläche des Substrats auf.

Gemäß einer bevorzugten Ausführungsform erfolgt die Vereinigung der beiden Laserstrahlen 1 und 2 durch einen Strahlkombinierer. Prinzipiell kann jede Art von Strahlteiler rückwärts betrieben auch als Strahlkombinierer zur Strahlvereinigung verwendet werden. Beispiele dafür sind aus dem Stand der Technik bekannte teildurchlässige Spiegel (Teilreflektoren), Pellicle-Strahlteiler, Polka-Dot-Strahlteiler, Prismen oder Strahlteilerwürfel. Durch den Einsatz unterschiedlicher Materialien im Strahlkombinierer kann das Verhältnis von Transmission zu Reflektion der beiden Laserstrahlen eingestellt werden, mitunter auch wellenlängenselektiv.

Besonderer Vorteil der Erfindung ist, dass der Schneideprozess und der Verfärbungsprozess zeitgleich in einem Laserschritt durchgeführt werden, d.h. die Struktur wird insgesamt nur einmal abgefahren, wodurch sich die Gesamtprozessdauer im Vergleich zu den aus dem Stand der Technik bekannten Verfahren halbiert bzw. deutlich verkürzt. Des Weiteren wird durch die Kombination von Schneide- und Verfärbungsprozess in einem Laserschritt auch on-the-fly unabhängig von der Laser-/Bahngeschwindigkeit eine exakte Passergenauigkeit zwischen Verfärbung und Schnitt erzielt.

Das Substrat besteht besonders bevorzugt aus Papier aus Baumwollfasern, wie es beispielsweise für Banknoten verwendet wird, oder aus anderen natürlichen Fasern oder aus Synthesefasern oder einer Mischung aus natürlichen und synthetischen Fasern, oder aus mindestens einer Kunststofffolie. Weiterhin bevorzugt besteht das Substrat aus einer Kombination aus mindestens zwei übereinander angeordneten und miteinander verbundenen unterschiedlichen Substraten, einem sogenannten Hybrid. Hierbei besteht das Substrat beispielsweise aus einer Kombination Kunststofffolie-Papier-Kunststofffolie, d.h. ein Substrat aus Papier wird auf jeder seiner beiden Seiten durch eine Kunststofffolie bedeckt, oder aus einer Kombination Papier-Kunststofffolie-Papier, d.h. ein Substrat aus einer Kunststofffolie wird auf jeder seiner beiden Seiten durch Papier bedeckt. Bei Hybrid wird in der Regel nur der Papierkern mit dem Laser bearbeitet, jedoch ist auch das Lasern der Folie möglich.
Angaben zum Gewicht des verwendeten Substrats sind beispielsweise in der Schrift DE 102 43 653 A9 angegeben, deren Ausführungen diesbezüglich vollumfänglich in diese Anmeldung aufgenommen werden. Die Schrift DE 102 43 653 A9 führt insbesondere aus, dass die Papierschicht üblicherweise ein Gewicht von 50 g/m² bis 100 g/m² aufweist, vorzugsweise von 80 g/m² bis 90 g/m². Selbstverständlich kann je nach Anwendung jedes andere geeignete Gewicht eingesetzt werden.

Wertdokumente, in denen ein derartiges Substrat bzw. Sicherheitspapier verwendet werden kann, sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Karten, wie beispielsweise Kredit- oder Debitkarten, deren Kartenkörper mindestens eine Lage eines Sicherheitspapiers aufweist und auch Produktsicherungselemente, wie Etiketten, Siegel, Verpackungen und dergleichen.

Die vereinfachte Benennung Wertdokument schließt alle oben genannten Materialien, Dokumente und Produktsicherungsmittel ein.

Als Passer oder Register im Sinne dieser Erfindung wird die Lagegenauigkeit von Druckbildern oder anderer Elemente zueinander auf Vorder- und/oder Rückseite eines Substrats bezeichnet. Beispielsweise stören bei Teilen von Druckbildern, die sich in Durchsicht zu einem Gesamtdruckbild ergänzen, bereits geringe Abweichungen von weniger als 0,1 mm zwischen den jeweiligen Druckbildern den visuellen Eindruck in Durchsicht erheblich. Die DIN 16500-2: 1987-01 definiert als Passer die Genauigkeit in der Drucktechnik, mit der die vorgesehene Wiedergabegüte der zu reproduzierenden Details erreicht bzw. eingehalten wird.
Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figurengezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1:: Querschnitt durch das Laserstrahlbündel, bestehend aus Laserstrahl 1 (schwarz) und Laserstrahl 2 (grau), auf Höhe der Arbeitsebene,
- Fig. 2:: Gauß-Profile des Laserstrahls 1 (schwarz) und des Laserstrahls 2 (grau), sowie das sich durch Kombination ergebende Profil des Strahlenbündels (gestrichelt),
- Fig. 3:: zeitgleiches Schneiden 4 (weiß) durch Laserstrahl 1 und Verfärben 5 (schraffiert) durch Laserstrahl 2 eines beschichteten Substrats 3 innerhalb eines Laservorgangs,
- Fig. 4:: beispielhafte Strukturen, die durch unabhängiges An- bzw. Ausschalten der beiden Laser in einem Laserschritt erzeugt werden können,
- Fig. 5:: Vereinigung zweier Laserstrahlen 1 und 2 mit Hilfe eines Strahlkombinierers,
- Fig. 6:: Erzeugung des Strahlenbündels durch Aufteilung eines Laserstrahls, anschließender Aufweitung eines der beiden Teilstrahlen und abschließender Rekombination der beiden Teilstrahlen,
- Fig. 7:: Erzeugung unterschiedlicher Strahldurchmesser in der Arbeitsebene durch bereits unterschiedliche Durchmesser der einfallenden Teilstrahlen,
- Fig. 8:: Erzeugung unterschiedlicher Strahldurchmesser und Energiedichten in der Arbeitsebene durch unterschiedliche Fokusebenen aufgrund von divergentem bzw. konvergentem Verhalten der einfallenden Teilstrahlen,
- Fig. 9:: doppelte Prozessgeschwindigkeit und exakte Passergenauigkeit bei direkter Randverfärbung durch Schnitt und Verfärbung in einem Laserschritt,
- Fig. 10:: deutlich erhöhte Prozessgeschwindigkeit bei alternierenden Kombinationsstrukturen durch kontinuierliche Scannerbewegung bzw. Scannergeschwindigkeit unter Dauerbetrieb der beiden Laser und Umschalten mittels Chopper.

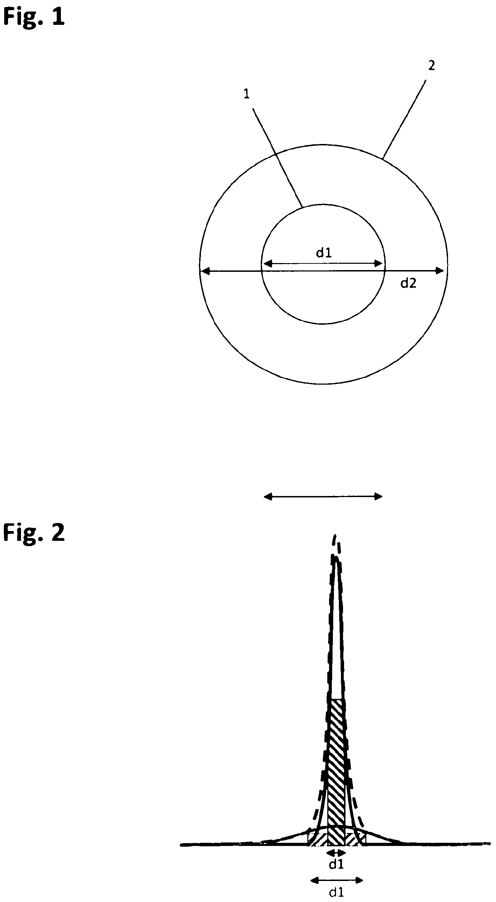

Fig. 1 zeigt schematisch die Projektion des Laserstrahls 1 mit dem Strahldurchmesser d1 und des Laserstrahls 2 mit dem Strahldurchmesser d2 im Bereich der Oberfläche des Substrats. Fig. 2 stellt das schematische Gauß-Profil der beiden Einzelstrahlen sowie des Strahlenbündels dar und zwar das Gauß-Profil des Laserstrahls 1 als schwarze, durchgezogene Linie, des Laserstrahls 2 als graue, durchgezogene Linie und das sich durch Kombination ergebende Gauß-Profil des Strahlenbündels als gestrichelte Linie. Im Bereich "d1" kommt es aufgrund der hohen Laserenergie zu einem Schneidevorgang des Substrats, während es im äußeren Bereich "d2" außerhalb von "d1" aufgrund der geringeren Laserenergie nur oberflächlich verfärbt wird.

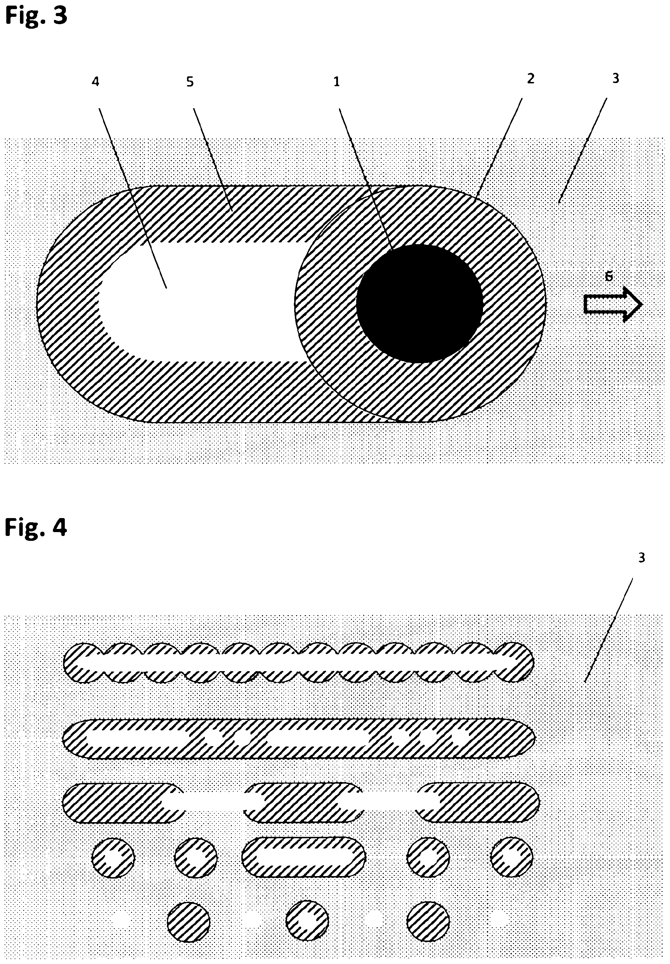

Gemäß Fig. 3 wird durch Bewegung des Laserstrahlbündels mit den beiden Laserstrahlen 1 und 2 in Richtung des Pfeils 6 über das beschichtete Substrat 3 dieses gleichzeitig im Bereich 4 geschnitten sowie entlang der Schnittkante im Bereich 5 oberflächlich verfärbt. Zwar wird auch während des Schneidevorgangs die Schnittkante geringfügig verfärbt, dies beschränkt sich allerdings auf einen im Vergleich zur Breite des Bereichs 5 sehr kleinen bzw. dünnen Bereich an der Schnittkante.

Durch Ausschalten des Laserstrahls 1 und Einschalten des Laserstrahls 2 können reine Verfärbungsstrukturen gelasert werden, wie beispielsweise durchgezogene, gestrichelte oder gepunktete Linien oder Flächen. Durch Ausschalten des Laserstrahls 2 und Einschalten des Laserstrahls 1 können reine Schnittmuster gelasert werden, wie beispielsweise Fenster oder Perforationen. Darüber hinaus sind durch unabhängiges An- und Ausschalten der beiden Laser (oder durch Chopper) passgenaue Kombinationsstrukturen unterschiedlichster Art möglich, wie sie beispielhaft in Fig. 4 dargestellt sind. Die in weißer Farbe dargestellten Flächen entsprechen hierbei dem Bereich 4 aus Fig. 3, die schraffiert dargestellten Flächen entsprechen dem Bereich 5 aus Fig. 3.

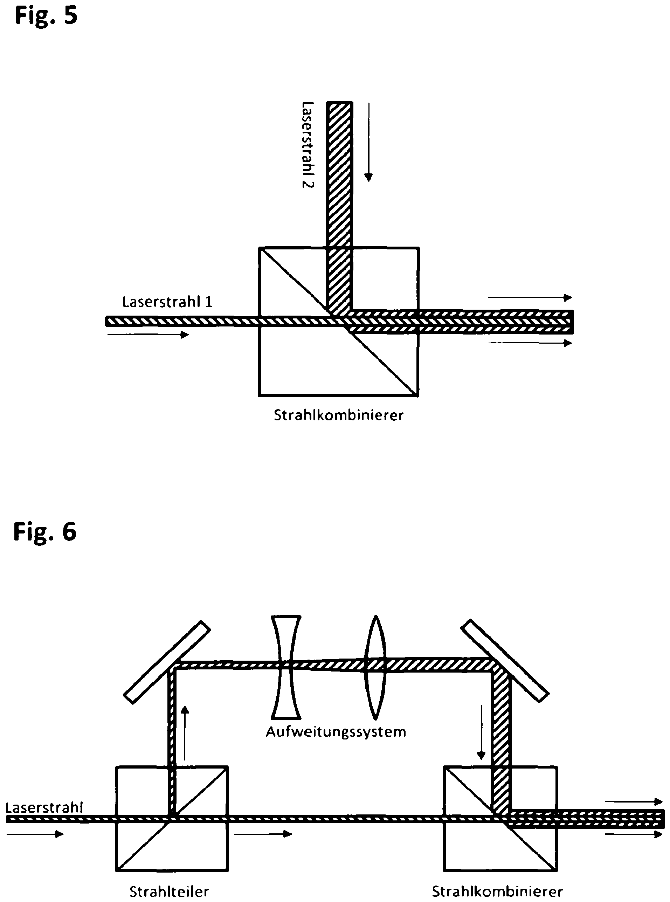

Fig. 5 zeigt die Vereinigung der beiden Laserstrahlen 1 und 2, die durch unterschiedliche Bauelemente erzielt werden kann, welche hier unter dem Sammelbegriff "Strahlkombinierer" zusammengefasst sind. Prinzipiell kann jede Art von Strahlteiler rückwärts betrieben auch zur Strahlvereinigung verwendet werden. Beispiele dafür sind teildurchlässige Spiegel (Teilreflektoren), Pellicle-Strahlteiler, Polka-Dot-Strahlteiler, Prismen oder Strahlteilerwürfel. Durch den Einsatz unterschiedlicher Materialien im Strahlkombinierer kann das Verhältnis von Transmission zu Reflektion der beiden Laserstrahlen eingestellt werden, mitunter auch wellenlängenselektiv (beispielsweise ZnSe, welches durchlässig für infrarotes Licht ist, während sichtbares Licht größtenteils reflektiert wird).

Die beiden Laserstrahlen können dabei entweder, wie in Fig. 5 dargestellt, aus unterschiedlichen Laserquellen oder, wie in Fig. 6 dargestellt, auch aus derselben Laserquelle stammen. Im letzteren Fall wird gemäß Fig. 6 ein Laserstrahl zunächst mit Hilfe eines Strahlteilers in zwei Einzelstrahlen aufgeteilt (entweder im Verhältnis 50:50 oder in einem anderen Verhältnis) und dann einer der beiden Teilstrahlen mit einem Aufweitungssystem aufgeweitet, bevor beide Teilstrahlen durch einen Strahlkombinierer wieder vereinigt werden.

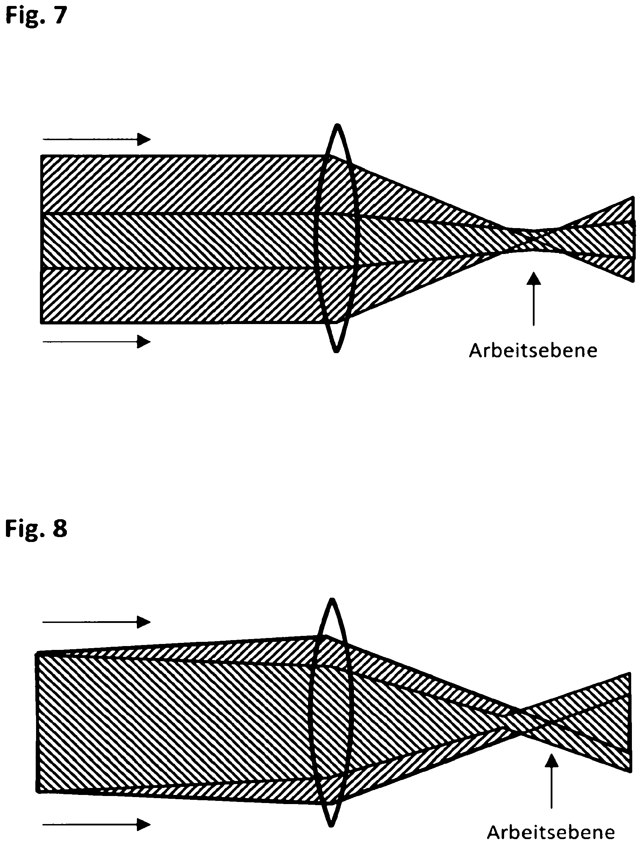

Wie oben beschrieben, zeichnet sich der Laserstrahl 2 (Verfärbungsprozess) im Vergleich zum Laserstrahl 1 (Schneideprozess) durch eine geringere Energiedichte aber einen größeren Strahldurchmesser in der Arbeitsebene aus. Dies kann gemäß Fig. 7 und 8 durch verschiedene Methoden erreicht werden, wobei insbesondere auch eine Kombination der Methoden möglich ist.

Hat gemäß Fig. 7 der Laserstrahl 1 einen größeren Strahldurchmesser als Laserstrahl 2, wird durch eine abschließende Fokussierungsoptik ein invertiertes Durchmesserverhältnis im gemeinsamen Fokuspunkt in der Arbeitsebene erzielt.

Gemäß Fig. 8 wird durch die Erzeugung eines leicht konvergenten Verhaltens des einen Laserstrahls und eines leicht divergenten Verhaltens des anderen Laserstrahls vor der Kombination der beiden Laserstrahlen hinter der anschließenden Fokussierungsoptik die Situation einer unterschiedlichen Fokusebene der beiden überlagerten Laserstrahlen erzeugt. Man kann also die Arbeitsebene in die Fokusebene des Laserstrahls 1 bringen, wo dieser maximale Energiedichte und minimalen Durchmesser besitzt ("Cut"), während die Fokusebene des Laserstrahls 2 dann leicht vor oder hinter der Arbeitsebene liegt, wodurch dieser Strahl in der Arbeitsebene eine niedrigere Energiedichte und einen größeren Durchmesser besitzt ("Color").

Alternativ kann auch ein Laserstrahl leicht konvergent und der andere stärker konvergent sein bzw. ein Laserstrahl leicht divergent und der andere stärker divergent. Auch ein paralleler Strahl und ein konvergenter bzw. divergenter Laserstrahl ist möglich.

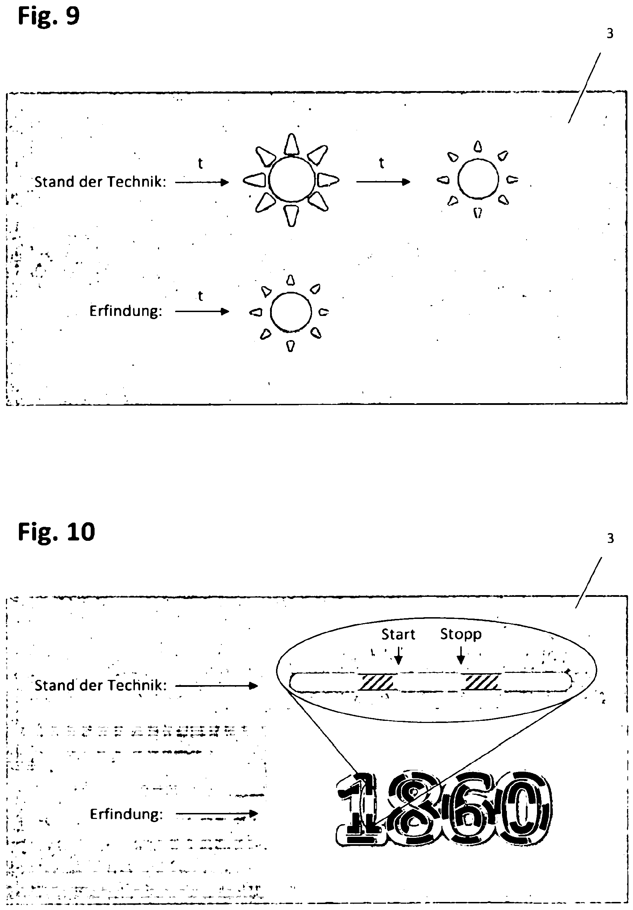

Beispielstrukturen, die die Vorteile der Erfindung gegenüber Verfahren des Standes der Technik veranschaulichen, sind in Fig. 9 und Fig. 10 dargestellt. Hierbei wird gemäß Fig. 9, obere Abbildung, eine graphische Abbildung in Form einer Sonne mit einem Verfahren des Standes der Technik erzeugt, wobei zwei unterschiedliche Laserschritte mit jeweils der Zeit t erfolgen. Der erste Laserschritt bringt Löcher in das Substrat 3 ein, der zweite Laserschritt färbt die Randbereiche der entsprechenden Löcher. Die untere Abbildung von Fig. 9 zeigt dasselbe Ergebnis, das jedoch nur in einem einzigen Laserschritt erzeugt wurde.

Fig. 10 zeigt die Erzeugung der graphischen Abbildung in Form der Zahl "1860", wobei die Umrisslinien der jeweiligen Ziffer aus einen Aneinanderreihung von länglichen Löchern besteht, in Fig. 10 in weißer Farbe dargestellt, zwischen denen jeweils ein verfärbter Bereich angeordnet ist, in Fig. 10 in schwarzer Farbe dargestellt. Dies kann erfindungsgemäß, wie in der unteren Abbildung von Fig. 10 dargestellt, beispielsweise durch Abfahren der zu erzeugenden Struktur mit dem kombinierten Laserstrahl mit Ein- und Ausschalten des entsprechenden Teil-Laserstrahls 1 oder 2 erzeugt werden. Mit einem Verfahren des Standes der Technik, wie in der oberen Abbildung von Fig. 10 dargestellt, muss die zu erzeugende Struktur zweimal nacheinander mit unterschiedlichen Laserstrahlen beaufschlagt werden, wobei der Laserstrahl zur Erzeugung des in der Mitte dargestellten Lochs an der mit "Start" bezeichnenden Position angeschaltet und an der mit "Stopp" bezeichneten Position wieder ausgeschaltet wird.

## Patentansprüche

1. Verfahren zur Herstellung eines Sicherheitsmerkmals für ein Sicherheitselement, ein Sicherheitspapier oder einen Datenträger, wobei ein Substrat (3) bereitgestellt wird, das durch Laserstrahlung hinsichtlich seiner Farbe modifizierbar ist, wobei durch Einwirkung von im Strahlquerschnitt intensitätsverteilter Laserstrahlung Löcher von bestimmtem Lochdurchmesser in das Substrat (3) eingebracht werden, **dadurch gekennzeichnet, dass** ein erster Laserstrahl (1) die Löcher in das Substrat (3) einbringt und ein zweiter Laserstrahl (2) die Modifizierung der Farbe des Substrats durchführt, wobei die beiden Laserstrahlen (1) und (2) zu einem einzigen Laserstrahl vereinigt werden, wobei der vereinigte Laserstrahl auf die Oberfläche des Substrats (3) geführt wird.

2. Verfahren nach Anspruch 1, **dadurch gekennzeichnet, dass** der erste Laserstrahl (1) eine zur Erzeugung der Löcher erforderliche hohe Intensität bzw. hohe Energiedichte auf der Oberfläche des Substrats und im Gegensatz dazu einen kleinen Strahldurchmesser auf der Oberfläche des Substrats aufweist.

3. Verfahren nach mindestens einem der vorigen Ansprüche, **dadurch gekennzeichnet, dass** der zweite Laserstrahl (2) eine für die Modifizierung der Farbe des Substrats (3) erforderliche niedrigere Intensität bzw. geringe Energiedichte als der erste Laserstrahl (1) auf der Oberfläche des Substrats und im Gegensatz dazu einen großen Strahldurchmesser auf der Oberfläche des Substrats aufweist.

4. Verfahren nach mindestens einem der vorigen Ansprüche, **dadurch gekennzeichnet, dass** die Vereinigung der beiden Laserstrahlen (1, 2) durch einen Strahlkombinierer durchgeführt wird.

5. Verfahren nach mindestens einem der vorigen Ansprüche, **dadurch gekennzeichnet, dass** das Substrat (3) aus Papier und/ oder aus einer Kunststofffolie gebildet ist.
